# EUROPEAN PATENT APPLICATION

(11) **EP 4 510 526 A1**
(43) Date of publication of application: **19.02.2025**
(21) Application number: 23806695.5
(22) Date of filing: 23.04.2023
(51) Int. Cl.: H04L 45/12

(54) **ROUTE SELECTION METHOD, NETWORK DEVICE, AND SYSTEM**

(30) Priority: 18.05.2022 CN 202210543914; 09.09.2022 CN 202211102700
(71) Applicant: Huawei Technologies Co., Ltd., Shenzhen, Guangdong 518129 (CN)
(72) Inventor: CHEN, Shuanglong, Shenzhen, Guangdong 518129 (CN); FAN, Dawei, Shenzhen, Guangdong 518129 (CN); LI, Zhenbin, Shenzhen, Guangdong 518129 (CN); WANG, Weibo, Shenzhen, Guangdong 518129 (CN); ZHUANG, Shunwan, Shenzhen, Guangdong 518129 (CN)
(74) Representative: Gill Jennings & Every LLP
(86) International application number: PCT/CN2023/090115
(87) International publication number: WO 2023/221742

(57) **Abstract**

This application discloses a route selection method, a network device, and a system. A first network device may obtain a plurality of routes arriving at a same prefix, and obtain trustworthiness information of each route. The first network device selects, based on trustworthiness of each route, one or more routes for guiding packet forwarding, where the trustworthiness of each route identifies a trustworthiness degree of the corresponding route. To be specific, when determining a route arriving at a destination address, the first network device selects, based on trustworthiness corresponding respectively to a plurality of optional routes, a route with a high trustworthiness degree for guiding packet forwarding, thereby meeting a service requirement.

## Description

This application claims priority to Chinese Patent Application No. 202210543914.7, filed on May 18, 2022 and entitled "METHOD FOR BGP ROUTE SELECTION BASED ON TRUSTED EVALUATION AND NETWORK DEVICE", which is incorporated herein by reference in its entirety. This application claims priority to Chinese Patent Application No. 202211102700.2, filed on September 9, 2022 and entitled "ROUTE SELECTION METHOD, NETWORK DEVICE, AND SYSTEM", which is incorporated herein by reference in its entirety.

### TECHNICAL FIELD

This application relates to the field of communication technologies, and in particular, to a route selection method, a network device, and a system.

### BACKGROUND

A border gateway protocol (Border Gateway Protocol, BGP) is a decentralized autonomous routing protocol. The border gateway protocol implements reachability between autonomous systems (Autonomous Systems, ASs) by maintaining an internet protocol (Internet Protocol, IP) routing table or a prefix table, and is a vector routing protocol. The border gateway protocol is to exchange routing information between the autonomous systems to discover a most effective route to access data at a specific location on the internet.

Currently, when a BGP routing table includes a plurality of routes arriving at a same destination address, a BGP device selects an optimal route according to a route selection rule and sends the route to a peer of the BGP device. However, when a service has a strict trustworthiness requirement on a network transmission path, the current BGP route selection rule cannot meet the requirement. As a result, a trusted transmission route cannot be provided for the service, affecting transmission quality of the service.

### SUMMARY

This application provides a BGP route selection method, a network device, and a system, to implement measurement from a perspective of trustworthiness of a route during route selection, so as to provide a trusted route for a service.

According to a first aspect of this application, a route selection method is provided. The method includes:
A first network device obtains a plurality of routes arriving at a same prefix; and the first network device selects, based on trustworthiness of each route, one or more routes for guiding packet forwarding. The trustworthiness of each route identifies a trustworthiness degree of the corresponding route. To be specific, when determining a route arriving at a destination address, the first network device selects, based on trustworthiness respectively corresponding to a plurality of optional routes, a route with a high trustworthiness degree for guiding packet forwarding, thereby meeting a service requirement.

In a possible implementation, if the selected one or more routes for guiding packet forwarding are trusted routes, the trusted route meets one or more of the following conditions: a route prefix of the route legally belongs to a specific AS, the route passes through a verifiable AS path, and the route is sent to a receiver securely. That is, in this embodiment, the trusted route is defined, so that the first network device selects the trusted route for packet forwarding.

In a possible implementation, if the trusted route is iterated to a trusted tunnel, the trusted tunnel may be a tunnel meeting one or more of the following conditions: All devices in the tunnel are trusted devices, all links in the tunnel are trusted links, and the trusted tunnel is a tunnel that provides security protection.

In a possible implementation, the method is applied to one or more of the following scenarios: an Internet scenario, a regional confederation scenario, and an internet exchange point (Internet Exchange Point, IXP) scenario.

In a possible implementation, that the first network device selects, based on trustworthiness of each route, one or more routes for guiding packet forwarding includes: The first network device obtains a first trustworthiness metric of each route, where the first trustworthiness metric is determined based on a security parameter item configured on a session established between the first network device and a second network device that sends the route; and the first network device selects, based on the first trustworthiness metric of each route, the one or more routes for guiding packet forwarding.

In a possible implementation, the first network device and the second network device are BGP peers.

In a possible implementation, that the first network device obtains a first trustworthiness metric corresponding to each route includes: The first network device obtains, for any route, a security value corresponding to each security parameter item; and the first network device performs weighted summation on security values, to obtain the first trustworthiness metric corresponding to the route.

In a possible implementation, a weight corresponding to each security parameter item is determined based on an application scenario corresponding to the first network device.

In a possible implementation, the security parameter item includes at least one or more of a resource public key infrastructure (Resource Public Key Infrastructure, RPKI) item, a route leak protection (route leak protection, RLP) item, and a session security item.

In a possible implementation, the RPKI item includes at least one or more of ingress (Ingress) route origin validation (route origin validation, ROV), egress route origin validation Egress ROV, BGP path verification BGP Sec, autonomous system provider authorization (Autonomous System Provider Authorization, ASPA), and regional validation (regional verification, RV).

In a possible implementation, the session security item includes at least one or more of an encrypted transmission item, an anti-tamper item, a periodic key change item, a session resilience anti-shock item, and an anti-distributed denial of service (Distributed denial of service, DDoS) attack item.

In a possible implementation, if a route is iterated to a tunnel, the security parameter item further includes a tunnel security item.

In a possible implementation, the method further includes: The first network device determines, based on a type of the tunnel, each tunnel security parameter item corresponding to the tunnel; and the first network device determines, based on a security value corresponding to each tunnel security parameter item, a tunnel security value corresponding to the tunnel.

In a possible implementation, that the first network device selects, based on the first trustworthiness metric of each route, the one or more routes for guiding packet forwarding includes: The first network device selects, based on a tunnel security value of each route, the one or more routes for guiding packet forwarding.

In a possible implementation, the type of the tunnel includes a segment routing over IPv6 (Segment Routing over IPv6, SRv6) tunnel, a virtual extensible local area network (Virtual Extensible Local Area Network, VXLAN) tunnel, and an internet protocol security (Internet Protocol Security, IPSec) tunnel.

In a possible implementation, that the first network device selects, based on the first trustworthiness metric of each route, the one or more routes for guiding packet forwarding includes: The first network device determines, based on the first trustworthiness metric, a first attribute value of the route corresponding to the first trustworthiness metric; and the first network device determines a route corresponding to a largest first attribute value as a route for guiding packet forwarding.

In a possible implementation, the first attribute value is a local preference Local_Pref attribute value or a multi-exit discriminator MED attribute value.

In a possible implementation, that the first network device selects, based on the first trustworthiness metric of each route, the one or more routes for guiding packet forwarding includes: The first network device selects, based on the first trustworthiness metric and a second trustworthiness metric of each route, the one or more routes for guiding packet forwarding, where the second trustworthiness metric is a trustworthiness metric corresponding to the route that arrives at the prefix and that is determined by the second network device.

In a possible implementation, that the first network device selects, based on the first trustworthiness metric and a second trustworthiness metric of each route, the one or more routes for guiding packet forwarding includes: The first network device performs, for each route, weighted summation on the first trustworthiness metric and the second trustworthiness metric that correspond to the route, to obtain a target trustworthiness metric corresponding to the route; and the first network device selects, based on the target trustworthiness metric of each route, the one or more routes for guiding packet forwarding.

In a possible implementation, the second trustworthiness metric is carried in a routing packet sent by the second network device to the first network device, and the routing packet includes the route, or is delivered by a controller to the first network device.

In a possible implementation, the method further includes: The first network device sends a link state advertisement to a third network device, where the link state advertisement includes the first trustworthiness metric, and the first trustworthiness metric is a trustworthiness metric of a link between the first network device and the third network device, so that the third network device determines a shortest path based on the first trustworthiness metric.

In a possible implementation, the link state advertisement includes link network layer reachability information (network layer reachability information, NLRI), and the link NLRI includes the first trustworthiness metric.

In a possible implementation, the link NLRI includes a first sub-type length value (type length value, TLV), and a target field in the first sub-TLV carries the first trustworthiness metric.

In a possible implementation, the link NLRI includes a second sub-TLV, and the second sub-TLV carries the first trustworthiness metric.

According to a second aspect of this application, a network device is provided. The network device is a first network device in a network and includes:
an obtaining unit, configured to obtain a plurality of routes arriving at a same prefix; and
a selection unit, configured to select, based on trustworthiness of each route, one or more routes for guiding packet forwarding, where the trustworthiness of each route identifies a trustworthiness degree of the corresponding route.

In a possible implementation, if the selected one or more routes for guiding packet forwarding are trusted routes, the trusted route meets one or more of the following conditions:
a route prefix of the route legally belongs to a specific autonomous system AS, the route passes through a verifiable AS path, and the route is sent to a receiver securely.

In a possible implementation, if the trusted route is iterated to a trusted tunnel, the trusted tunnel meets one or more of the following conditions:

All devices in the tunnel are trusted devices, all links in the tunnel are trusted links, and the trusted tunnel is a tunnel that provides security protection.

In a possible implementation, the first network device is applied to one or more of the following scenarios: an Internet scenario, a regional confederation scenario, and an internet exchange point IXP scenario.

In a possible implementation, the selection unit includes an obtaining subunit and a selection subunit, where
the obtaining subunit is configured to obtain a first trustworthiness metric of each route, where the first trustworthiness metric is determined based on a security parameter item configured on a session established between the network device and a second network device that sends the route; and
the selection subunit is configured to select, based on the first trustworthiness metric of each route, the one or more routes for guiding packet forwarding.

In a possible implementation, the first network device and the second network device are border gateway protocol BGP peers.

In a possible implementation, the obtaining subunit is configured to: obtain, for any route, a security value corresponding to each security parameter item; and perform weighted summation on security values, to obtain the first trustworthiness metric corresponding to the route.

In a possible implementation, a weight corresponding to each security parameter item is determined based on an application scenario corresponding to the first network device.

In a possible implementation, the security parameter item includes at least one or more of a resource public key infrastructure RPKI item, a route leak protection RLP item, and a session security item.

In a possible implementation, the RPKI item includes at least one or more of ingress route origin validation Ingress ROV, egress route origin validation Egress ROV, BGP path verification BGP Sec, autonomous system provider authorization ASPA, and regional validation RV.

In a possible implementation, the session security item includes at least one or more of an encrypted transmission item, an anti-tamper item, a periodic key change item, a session resilience anti-shock item, and an anti-distributed denial of service DDoS attack item.

In a possible implementation, if a route is iterated to a tunnel, the security parameter item further includes a tunnel security item.

In a possible implementation, the network device further includes a determining unit, where
the determining unit is configured to: determine, based on a type of the tunnel, each tunnel security parameter item corresponding to the tunnel; and determine, based on a security value corresponding to each tunnel security parameter item, a tunnel security value corresponding to the tunnel.

In a possible implementation, the selection subunit is configured to select, based on a tunnel security value of each route, the one or more routes for guiding packet forwarding.

In a possible implementation, the type of the tunnel includes a segment routing over IPv6 SRv6 tunnel, a virtual extensible local area network VXLAN tunnel, and an internet protocol security IPSec tunnel.

In a possible implementation, the selection subunit is specifically configured to determine, based on the first trustworthiness metric, a first attribute value of the route corresponding to the first trustworthiness metric; and determine a route corresponding to a largest first attribute value as a route for guiding packet forwarding.

In a possible implementation, the first attribute value is a local preference Local_Pref attribute value or a multi-exit discriminator MED attribute value.

In a possible implementation, the selection subunit is specifically configured to select, based on the first trustworthiness metric and a second trustworthiness metric of each route, the one or more routes for guiding packet forwarding, where the second trustworthiness metric is a trustworthiness metric corresponding to the route that arrives at the prefix and that is determined by the second network device.

In a possible implementation, the selection subunit is specifically configured to: perform, for each route, weighted summation on the first trustworthiness metric and the second trustworthiness metric that correspond to the route, to obtain a target trustworthiness metric corresponding to the route; and select, based on the target trustworthiness metric of each route, the one or more routes for guiding packet forwarding.

In a possible implementation, the second trustworthiness metric is carried in a routing packet sent by the second network device to the first network device, and the routing packet includes the route, or is delivered by a controller to the first network device.

In a possible implementation, the network device further includes a sending unit, where
the sending unit is configured to send a link state advertisement to a third network device, where the link state advertisement includes the first trustworthiness metric, and the first trustworthiness metric is a trustworthiness metric of a link between the first network device and the third network device, so that the third network device determines a shortest path based on the first trustworthiness metric.

In a possible implementation, the link state advertisement includes link network layer reachability information NLRI, and the link NLRI includes the first trustworthiness metric.

In a possible implementation, the link NLRI includes a first sub-type length value TLV, and a target field in the first sub-TLV carries the first trustworthiness metric.

In a possible implementation, the link NLRI includes a second sub-TLV, and the second sub-TLV carries the first trustworthiness metric.

According to a third aspect of this application, a route selection system is provided. The system includes a first network device and a second network device. The second network device is configured to send a route to the first network device, and the first network device is configured to perform the method in any one of the first aspect or the possible designs of the first aspect based on the route sent by the second network device.

According to a fourth aspect of this application, a network device is provided. The device includes a processor and a memory. The memory is configured to store instructions or a computer program. The processor is configured to execute the instructions or the computer program in the memory, so that the network device performs the method in any one of the first aspect or the possible designs of the first aspect.

According to a fifth aspect of this application, a computer-readable storage medium is provided, including instructions. When the instructions are run on a computer, the computer is enabled to perform the method in any one of the first aspect or the possible designs of the first aspect.

According to a sixth aspect of this application, a computer program product is provided, where the computer program product includes a program. When the program is run on a processor, a computer or a network device is enabled to perform the method in any one of the first aspect or the possible designs of the first aspect.

According to a seventh aspect of this application, a chip is provided, including an interface circuit and a processor. The interface circuit is connected to the processor, and the processor is configured to enable the chip to perform the method in any one of the first aspect or the possible designs of the first aspect.

According to the technical solutions provided in this application, the first network device may obtain the plurality of routes arriving at the same prefix, and obtain trustworthiness information of each route. The first network device selects, based on the trustworthiness of each route, the one or more routes for guiding packet forwarding. The trustworthiness of each route identifies the trustworthiness degree of the corresponding route. To be specific, when determining a route arriving at a destination address, the first network device selects, based on trustworthiness respectively corresponding to a plurality of optional routes, a route with a high trustworthiness degree for guiding packet forwarding, thereby meeting a service requirement.

### BRIEF DESCRIPTION OF DRAWINGS

To describe technical solutions in embodiments of this application or in the conventional technology more clearly, the following briefly describes accompanying drawings for describing embodiments or the conventional technology. It is clear that the accompanying drawings in the following description show some embodiments described in this application, and a person of ordinary skill in the art may still derive other accompanying drawings from these accompanying drawings without creative efforts.
FIG. 1 is a flowchart of a route selection method according to an embodiment of this application;
FIG. 2 is a diagram of a security parameter item according to an embodiment of this application;
FIG. 3 is a diagram of trusted technologies on which different scenarios depend according to an embodiment of this application;
FIG. 4 is a diagram of a trusted tunnel according to an embodiment of this application;
FIG. 5 is a diagram of an application scenario according to an embodiment of this application;
FIG. 6 is a diagram of obtaining a trustworthiness metric according to an embodiment of this application;
FIG. 7a is a diagram of a structure of NLRI according to an embodiment of this application;
FIG. 7b is a diagram of an application scenario according to an embodiment of this application;
FIG. 8 is a diagram of a structure of a network device according to an embodiment of this application;
FIG. 9 is a diagram of a structure of another network device according to an embodiment of this application; and
FIG. 10 is a diagram of a structure of still another network device according to an embodiment of this application.

### DESCRIPTION OF EMBODIMENTS

To make a person skilled in the art understand solutions in this application better, the following clearly and completely describes the technical solutions in embodiments of this application with reference to accompanying drawings in embodiments of this application. It is clear that the described embodiments are merely a part rather than all of embodiments of this application.

For ease of understanding the technical solutions provided in this application, the following first describes technologies in this application.

A trusted route is a route that meets one or more of the following conditions: A route prefix legally belongs to a specific AS, the route passes through a verifiable AS path, and the route is sent to a receiver securely. That is, a route can be determined as a trusted route as long as it meets any of the foregoing conditions.

A trusted tunnel is a tunnel that meets one or more of the following conditions: All devices in the tunnel are trusted devices, all links in the tunnel are trusted links, and the trusted tunnel is a tunnel that provides security protection. That is, a tunnel can be determined as a trusted tunnel as long as it meets any one of the foregoing conditions.

A trustworthiness degree of a route is reflected by trustworthiness of the route. A higher trustworthiness degree indicates that the route is more trustworthy and can be used for guiding packet forwarding.

Currently, when selecting BGP routes, a network device compares attributes of the routes in sequence. If an optimal route can be selected based on the foregoing attributes, subsequent comparisons are not performed. When a service has a trustworthiness requirement for a network transmission route, a current route selection rule cannot be met, affecting service transmission. Main attributes of a BGP route include:

| Property name | Meaning | Type |
|---|---|---|
| Origin attribute | Defines a source of path information and marks how a route becomes a BGP route. | Well-known mandatory |
| AS_Path attribute | Records numbers of all ASs that a route passes through from a local address to a destination address in a vector order. | Well-known mandatory |
| Next_Hop attribute | Records next hop information of a route. | Well-known mandatory |
| Local_Pref attribute | BGP priority of a router, which is used to determine an optimal route when traffic leaves an AS. | Well-known discretionary |
| MED attribute | Determines an optimal route when traffic enters an AS. | Optional non-transitive |
| Community attribute | Identifies BGP routes with a same feature, so that application of a routing policy is more flexible, and maintenance and management are simplified. | Optional transitive |
| Originator_ID attribute | Avoids a loop in a route reflector scenario. | Optional non-transitive |
| Cluster_List attribute | Avoids a loop in a route reflector scenario. | Optional non-transitive |

Based on the foregoing problem, an embodiment of this application provides a route selection method, so that when a route is selected, selection is performed based on trustworthiness corresponding to the route, for guiding packet forwarding via a trusted route, thereby meeting a service requirement.

For ease of understanding the technical solutions provided in embodiments of this application, the following provides descriptions with reference to accompanying drawings.

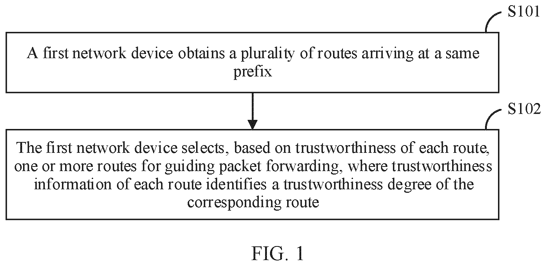

FIG. 1 is a flowchart of a route selection method according to an embodiment of this application. As shown in FIG. 1, the method includes the following steps.

S101: A first network device obtains a plurality of routes arriving at a same prefix.

In this embodiment, when performing route selection, the first network device first obtains the plurality of routes arriving at the same prefix. The first network device may receive routes sent by a plurality of second network devices connected to the first network device. When the plurality of routes arriving at the same prefix are BGP routes, the first network device and the second network device are BGP peers.

S102: The first network device selects, based on trustworthiness of each route, one or more routes for guiding packet forwarding.

In this embodiment, after obtaining the plurality of routes arriving at the same prefix, the first network device obtains trustworthiness information corresponding to each route, to select, based on the trustworthiness information of each route, the one or more routes for guiding packet forwarding. In other words, one or more trusted routes are selected to perform packet forwarding based on the trustworthiness of each route. The trustworthiness information of each route identifies a trustworthiness degree of the corresponding route. The first network device selects a route with a high trustworthiness degree to perform packet forwarding.

The trusted route includes a route that meets one or more of the following conditions: a route prefix legally belongs to a specific AS, the route passes through a verifiable AS path, and the route is sent to a receiver securely. The receiver is a device that receives the route, for example, the first network device. When the trusted route is iterated to a trusted tunnel, the trusted tunnel meets one or more of the following conditions: All devices in the tunnel are trusted devices, all links in the tunnel are trusted links, and the trusted tunnel is a tunnel that provides security set integrity protection. The trusted device is a device that has capabilities such as an identity authentication and authorization mechanism and data security and confidentiality protection. The trusted link is a link that has security capabilities such as anti-tamper, anti-monitoring, and data encryption during data transmission.

In some implementations, a trustworthiness degree of a route may be reflected by using a trustworthiness metric corresponding to the route. Specifically, that the first network device selects, based on trustworthiness of each route, one or more routes for guiding packet forwarding includes: The first network device obtains, a first trustworthiness metric of each route; and the first network device selects, based on the first trustworthiness metric of each route, the one or more routes for guiding packet forwarding. The first trustworthiness metric is determined based on a security parameter item configured on a session established between the first network device and the second network device that sends the routing information, and identifies the trustworthiness degree of the corresponding route. To be specific, after obtaining the first trustworthiness metric corresponding to each route, the first network device selects, by comparing all the first trustworthiness metrics corresponding to all the routes, one or more routes with a high trustworthiness degree. A relationship between a first trustworthiness metric and a trustworthiness degree may be preset based on an actual application situation. For example, a smaller first trustworthiness metric indicates a higher trustworthiness degree, and a larger first trustworthiness metric indicates a lower trustworthiness degree. In this case, the first network device may select a route with a smallest first trustworthiness metric, or select a route whose first trustworthiness metric is less than a preset threshold.

The first trustworthiness metric is determined by the security parameter item configured on the session established between the first network device and the second network device that sends the route. Specifically, for any route, the first network device obtains a security value corresponding to each security parameter item, and performs weighted summation on security values, to obtain the first trustworthiness metric corresponding to the routing information. A same security parameter item corresponds to different security values when different functions are configured for the same security parameter item.

The security parameter item may include one or more of a resource public key infrastructure RPKI item, a route leak protection RLP item, a session security item, and other security items. The RPKI avoids a BGP route hijack or route leak, and may be implemented by using a plurality of technical solutions, for example, ingress (Ingress) route origin validation ROV, egress (Egress) route origin validation ROV, BGP path validation BGP Sec, autonomous system provider authorization ASPA, and regional validation RV. The session security item may include one or more of an encrypted transmission item, an anti-tamper item, a periodic key change item, a session resilience anti-shock item, and an anti-distributed denial of service DDoS attack item.

The other security items may include a BGP monitoring protocol (BGP monitoring protocol, BMP) that may be used to monitor a BGP session; and a registration termination request (registration termination request, RTR) protocol.

ROV is a route security protection mechanism that defends against a BGP route hijack attack based on the RPKI. A core of ROV is to perform bind authentication on a number of an AS and a route prefix authorized to the AS for use through an RPKI data object ROA, to assist a router in quickly filtering a malicious route advertisement that may cause a route hijack.

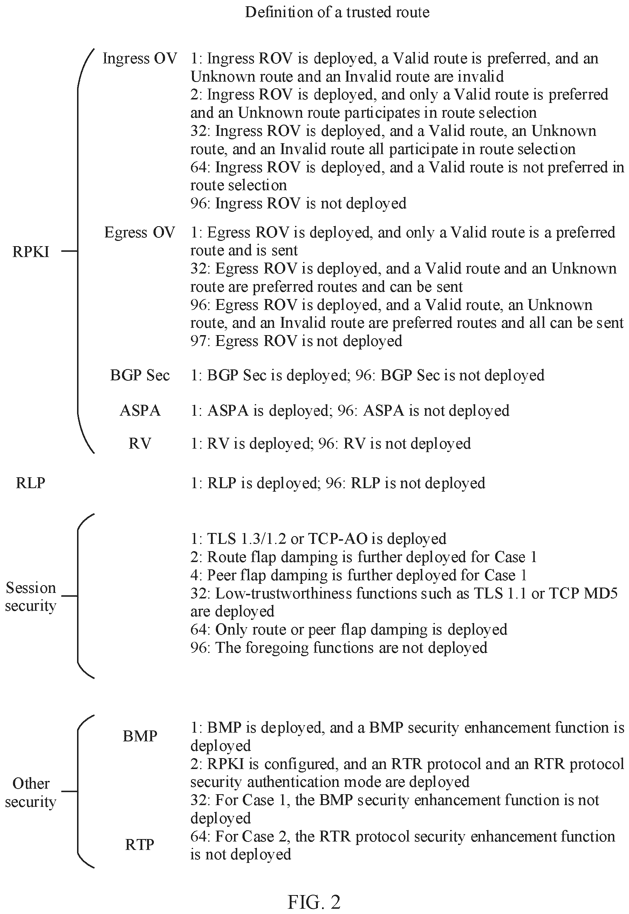

For ease of understanding the security value corresponding to each security parameter item in this application, refer to a diagram of configuration of the security parameter item shown in FIG. 2. In this scenario, for the Ingress ROV security item, if Ingress ROV is deployed, a Valid route is preferred, and an Unknown route and an Invalid route are invalid, a corresponding security value is 1. If Ingress ROV is deployed, and only a Valid route is preferred and an Unknown route participates in route selection, a corresponding security value is 2. If Ingress ROV is deployed, and a Valid route, an Unknown route, and an Invalid route all participate in route selection, a corresponding security value is 32. If Ingress ROV is deployed, and a Valid route is not preferred in route selection, a corresponding security value is 64. If Ingress ROV is not deployed, a corresponding security value is 96.

For the Egress ROV security item, if Egress ROV is deployed, and only a Valid route is a preferred route and can be sent, a corresponding security value is 1. If Egress ROV is deployed, and a Valid route and an Unknown route are preferred routes and can be sent, a corresponding security value is 32. If Egress ROV is deployed, and a Valid route, an Unknown route, and an Invalid route are preferred routes and can be sent, a corresponding security value is 96. If Egress ROV is not deployed, a corresponding security value is 97. For the BGP Sec security item, if BGP Sec is deployed, a corresponding security value is 1. If BGP Sec is not deployed, a corresponding security value is 96.

For the ASPA security item, if ASPA is deployed, a corresponding security value is 1. If ASPA is not deployed, a corresponding security value is 96.

For the RV security item, if RV is deployed, a corresponding security value is 1. If RV is not deployed, a corresponding security value is 96.

For the RLP security item, if RLP is deployed, a corresponding security value is 1. If RLP is not deployed, a corresponding security value is 96.

For the session security item, in Case 1: If a transport layer security (transport layer security, TLS) 1.3 or 1.2 is deployed or a transmission control protocol authentication option (transmission control protocol authentication option, TCP-AO) is deployed, a corresponding security value is 1. If route flap damping is further deployed for Case 1, a corresponding security value is 2. If peer flap damping is further deployed for Case 1, a corresponding security value is 4. If low-trustworthiness functions such as TLS 1.1 or TCP MD5 are deployed, a corresponding security value is 32. If only route or peer flap damping is deployed, a corresponding security value is 64. If any of the foregoing functions is not deployed, a corresponding security value is 96.

For the other security items, in Case 1: If the BMP is deployed, and a BMP security enhancement function is deployed, a corresponding security value is 1. In Case 2: If RPKI is configured, and the RTR protocol and an RTR protocol security authentication mode are deployed, a corresponding security value is 2. In Case 1, if the BMP security enhancement function is not deployed, a corresponding security value is 32. In Case 2, if the RTR protocol security enhancement function is not deployed, a corresponding security value is 64.

In addition, the security parameter item may further include a source route verification item, to be specific, a source route is verified by using a source address verification architecture (source address validation architecture, SAVA). If an SAVA protocol is deployed on a BGP transmission path, a corresponding security value is 1. If the SAVA protocol is not deployed, a corresponding security value is 32. The SAVA protocol mainly provides a transparent service at a network layer to ensure that each packet forwarded in the internet uses a "real source IP address".

For example, the first network device receives routes with a same prefix respectively sent by a peer 1 and a peer 2, a first trustworthiness metric corresponding to a route received from the peer 1 is 101 (for example, Ingress ROV: 1; BGP Sec&ASPA: 96; session security: 2; and BMP&RTR: 2), and a first trustworthiness metric corresponding to routing information received from the peer 2 is 37 (Ingress ROV: 1; BGP Sec&ASPA: 2; session security: 32; and BMP&RTR: 2). A smaller trustworthiness metric indicates higher trustworthiness. Therefore, the route received from the peer 2 is preferred.

During specific implementation, for each obtained route, the first network device obtains the security value corresponding to each security parameter item corresponding to the route, and performs weighted summation on security values to obtain the first trustworthiness metric corresponding to the route. A weight corresponding to each security parameter item is determined based on an application scenario corresponding to the first network device. In different application scenarios, a same security parameter item corresponds to different weights. Common application scenarios include an Internet scenario, a regional confederation scenario, and an IXP scenario. For example, in the internet scenario, a weight of the BGP Sec security item is 0.6, while in the regional confederation scenario, a weight of the BGP Sec security item is 0.1. In other words, in different application scenarios, security technologies have different focuses.

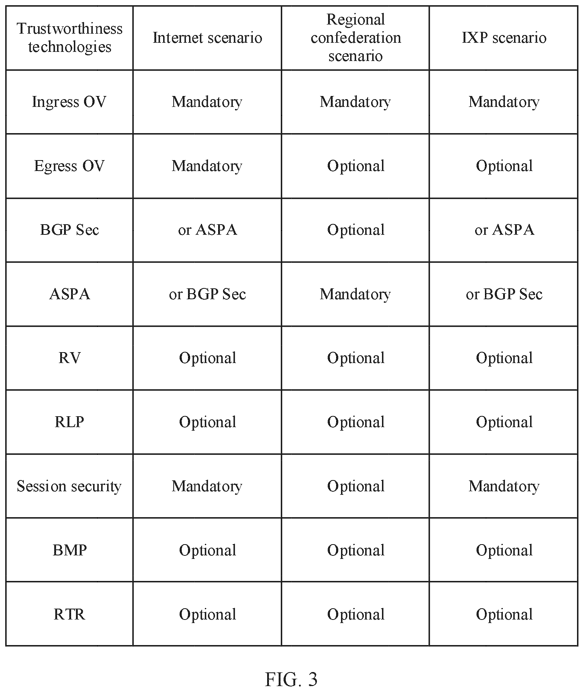

For example, FIG. 3 is a diagram of focuses of different scenarios. In the internet scenario, when the trusted route is determined, security values corresponding respectively to the ingress ROV security item, the egress ROV security item, the BGP Sec security item and/or the ASPA security item, and the session security item need be obtained, and security values of the RV security item, the RLP security item, the BMP security item, and the RTR security item are optional. In the regional confederation scenario, when the trusted route is determined, security values corresponding respectively to the ingress ROV security item and the ASPA security item, and security values of the other security items are optional. In the IXP scenario, when the trusted route is determined, security values corresponding respectively to the ingress ROV security item, the BGP Sec security item and/or the ASPA security item, and the session security item need be obtained, and security values of the other security items are optional.

In some implementations, when a route is iterated to a tunnel, the security parameter item further includes a tunnel security item. Whether the tunnel is a trusted tunnel is determined based on a security value corresponding to the tunnel security item. Specifically, the first network device determines, based on a type of the tunnel, each tunnel security parameter item corresponding to the tunnel; and the first network device determines, based on a security value corresponding to each tunnel security parameter item, a tunnel security value corresponding to the tunnel. Common tunnel types may include an a segment routing over IPv6 SRv6 tunnel, a virtual extensible local area network VXLAN tunnel, and an internet protocol security IPSec tunnel. Different tunnel security items may be pre-configured for different types of tunnels.

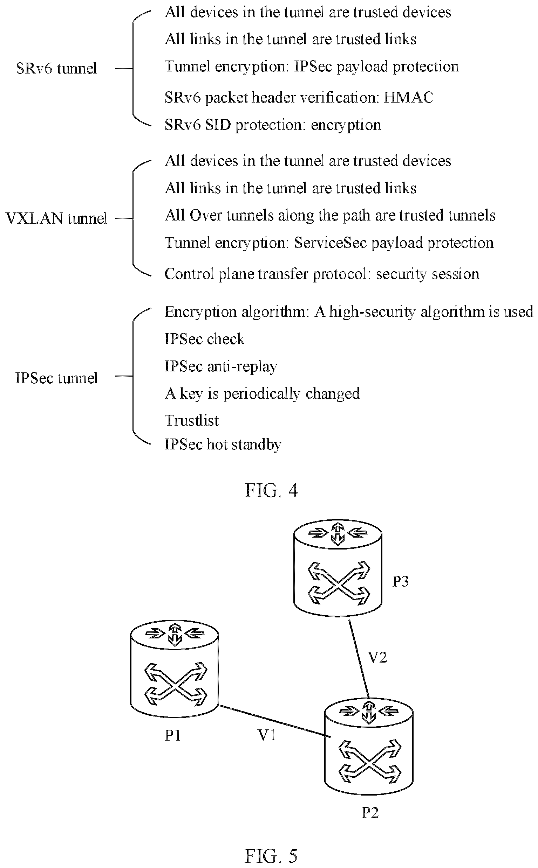

For example, FIG. 4 is a diagram of configuring tunnel security items for the foregoing three types of tunnels. A tunnel security item corresponding to the SRv6 tunnel may include one or more of the following: All devices in the tunnel are trusted devices, all links in the tunnel are trusted links, the tunnel is encrypted, an SRv6 packet header is verified, an SRv6 SID is encrypted, and the like. In other words, when all the devices in the tunnel corresponding to the tunnel are trusted devices, all the links in the tunnel corresponding to the tunnel are trusted links, the tunnel is encrypted, the SRv6 packet header is verified, or the SRv6 SID is encrypted, it may be determined that the tunnel is a trusted tunnel. The tunnel may be encrypted in an IPSec payload protection manner, and the SRv6 packet header may be verified via a Hash-based message authentication code (hash-based message authentication code, HMAC).

A tunnel security item corresponding to the VXLAN tunnel may include one or more of the following: All devices in the tunnel are trusted devices, all links in the tunnel are trusted links, all Over tunnels along the path are trusted tunnels, the tunnel is encrypted, and a control plane transfer protocol is used. In other words, when all the devices in the tunnel corresponding to the tunnel are trusted devices, all the links in the tunnel are trusted links, all the Over tunnels along the path are trusted tunnels, the tunnel is encrypted, or a session is performed according to the control plane transfer protocol, it may be determined that the tunnel is a trusted tunnel. The tunnel may be encrypted in a ServiceSec payload protection manner.

A tunnel security item corresponding to the IPSec tunnel includes one or more of the following: a high-security encryption algorithm is used, IPSec check is performed, IPSec anti-replay is performed, a key is periodically changed, a trustlist is set, and IPSec hot standby is configured. In other words, when a tunnel uses the high-security encryption algorithm, performs the IPSec check, performs IPSec anti-replay, periodically changes the key, sets the trustlist, or configures IPSec hot standby, it may be determined that the tunnel is a trusted tunnel. Hot standby means that a primary server and a secondary server are connected via a TCP/IP network. In normal cases, the primary server is in a working state, and the secondary server is in a monitoring state. Once the secondary server detects that the primary server is abnormal, the secondary server replaces the primary server in a very short time to completely implement a function of the primary server.

During specific implementation, different values may be pre-configured for whether each tunnel security item meets a condition, to determine, based on a configuration status of the tunnel security item corresponding to the route, the security value corresponding to each tunnel security item, and perform weighted summation on security values to obtain the tunnel security value. When the security parameter item corresponding to the route includes the tunnel security item, the first trustworthiness metric is determined based on the tunnel security value, and then the route is selected based on the first trustworthiness metric. Alternatively, when the security parameter item corresponding to the route includes the tunnel security item, the one or more routes may be selected based on the tunnel security value of each route for guiding packet forwarding. For example, when a tunnel security value corresponding to a route meets a preset condition, the route is selected for guiding packet forwarding.

In some implementations, to enable the first network device to select the trusted route based on the first trustworthiness metric of each route, the trustworthiness information of the route may be set as a routing attribute, and a preference level of the routing attribute is higher than that of another attribute. Alternatively, an attribute value of the routing attribute may be adjusted based on the first trustworthiness metric. Specifically, the first network device determines, based on the first trustworthiness metric, a first attribute value of routing information corresponding to the first trustworthiness metric; and the first network device determines routing information corresponding to a maximum attribute value as a route for guiding packet forwarding. The first attribute value may be a local preference Local_Pref attribute value or a multi-exit discriminator MED attribute value. Generally, a determining priority of a Local_Pref attribute is higher than that of an MED attribute. Therefore, the Local_Pref attribute value may be adjusted based on the first trustworthiness metric. For example, the Local_Pref attribute value is 100 by default. When the first trustworthiness metric corresponding to the routing information indicates that the corresponding route is untrustworthy, the Local_Pref attribute value is set to 0. When the first trustworthiness metric corresponding to the routing information indicates that the corresponding route is trustworthy, the Local _Pref attribute value is set to 200. A route with a larger Local_Pref attribute value is preferred over a route with a smaller Local _Pref attribute value.

In some implementations, when routes are determined for different network devices with a same prefix, the routes may be selected based on trustworthiness metrics of the routes. The first network device may determine the route not only based on a first trustworthiness metric of a currently obtained route, but also based on a second trustworthiness metric on which a previous network device depends when the previous network device that sends the route determines the route, to select the route based on the first trustworthiness metric and the second trustworthiness metric. The second trustworthiness metric is a trustworthiness metric on which the second network device depends when the second network device determines the route arriving at the prefix. Specifically, for each route, the first network device performs weighted summation on the first trustworthiness metric and a second trustworthiness metric that correspond to the route, to obtain a target trustworthiness metric corresponding to the route; and the first network device selects, based on the target trustworthiness metric of each route, the one or more routes for guiding packet forwarding. That is, when selecting the route, the first network device considers the first trustworthiness metric corresponding to the current route, and also considers the second trustworthiness metric on which the previous network device depends when the previous network device selects the route. This ensures reliability of the selected route.

For example, in an application scenario shown in FIG. 5, the first network device is P2, the second network devices are P1 and P3, and the P2 receives routes respectively sent by the P1 and the P3. When the P1 selects a route, a trustworthiness metric on which the P1 depends is Vx1; and when the P3 selects a route, a trustworthiness metric on which the P3 depends is Vy1. When determining a target trustworthiness metric corresponding to the route sent by the P1, the P2 may perform weighted summation on trustworthiness metrics Vx1 and V1, to obtain a trustworthiness metric Vx2. Similarly, when determining a target trustworthiness metric corresponding to the route sent by the P3, the P2 may perform weighted summation on trustworthiness metrics Vy1 and V2, to obtain a trustworthiness metric Vy2. The P2 compares Vx2 and Vy2 and selects the route sent by the P1 for guiding packet forwarding. When the P2 sends the route to a next network device, a trustworthiness metric that is obtained by the next network device and on which the P2 depends when the P2 selects the route may be V1 or Vx2.

The first network device may obtain the second trustworthiness metric in the following manners. One manner is to obtain the second trustworthiness metric by parsing a routing packet sent by the second network device, where the routing packet includes the second trustworthiness metric and the route. In another manner, a controller may collect second trustworthiness metrics corresponding to all network devices in a network, and the controller delivers the second trustworthiness metrics to the first network device.

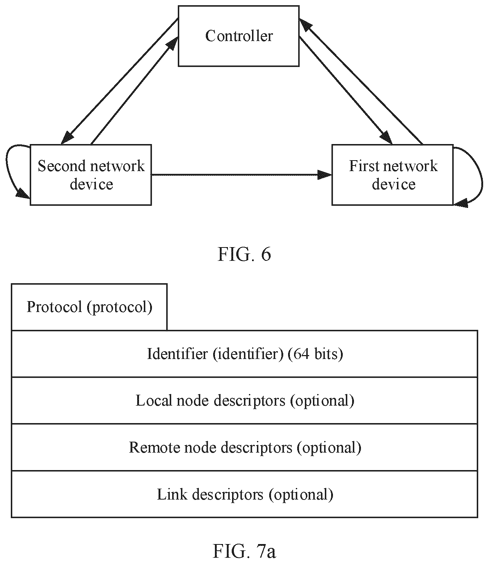

For example, FIG. 6 is a diagram of an application scenario. The application scenario includes a first network device, a second network device, and a controller. Trustworthiness metrics corresponding respectively to the first network device and the second network device may be evaluated by the first network device and the second network device, or may be evaluated by the controller. The following separately provides descriptions.
(1) The first network device and the second network device perform evaluation.

In this embodiment, when selecting a route, the second network device determines a trustworthiness metric 1 corresponding to the route obtained by the second network device. After the trustworthiness metric 1 is obtained, the trustworthiness metric 1 may be sent to the controller and the controller delivers the trustworthiness metric 1 to the first network device, or may be directly sent to the first network device. Similarly, when selecting a route, the first network device determines a trustworthiness metric 2 of the route sent by the second network device. After the trustworthiness metric 2 is obtained, the trustworthiness metric 2 may be sent to the controller, and the controller delivers the trustworthiness metric 2 to a next network device, or the first network device directly sends the trustworthiness metric 2 to a next network device. When selecting a route, the first network device determines an overall trustworthiness metric of the route based on the trustworthiness metric 1 and the trustworthiness metric 2, and further determines the route based on the overall trustworthiness metric.

(2) The controller evaluates the trustworthiness metrics of the routes.

When selecting a route, the second network device may send, to the controller, trustworthiness information (a function configured for each security parameter item) for evaluating a trustworthiness metric. The controller determines a trustworthiness metric 1 based on the trustworthiness information, and may locally store the trustworthiness metric 1 and send the trustworthiness metric 1 to the second network device. After obtaining the trustworthiness metric 1, the second network device selects the route based on the trustworthiness metric 1. Alternatively, the second network device may directly send the trustworthiness metric 1 to the first network device.

When selecting a route, the first network device may send, to the controller, trustworthiness information (a function configured for each security parameter item) for evaluating a trustworthiness metric. The controller determines a trustworthiness metric 2 based on the trustworthiness information, and may locally store the trustworthiness measurement value 2 and send the trustworthiness metric 2 to the first network device. In addition, the first network device may obtain the trustworthiness metric 1 from the controller, to select, based on the trustworthiness metric 1 and the trustworthiness metric 2, a route for guiding packet forwarding.

Currently, a shortest path first (shortest path first, SPF) algorithm is introduced into the BGP protocol. Information such as a node and a link is transferred by extending the BGP protocol, and then a final route is calculated according to the SPF algorithm. A local link based on a BGP-SPF algorithm generates link (link) network layer reachability information (network layer reachability information, NLRI), to carry information about the local link via the link NLRI. When a BGP device determines a trustworthy shortest path according to the SPF algorithm, how to define trustworthiness of a link?

Based on this, in some implementations, the first network device sends a link state advertisement to a third network device, where the link state advertisement includes the first trustworthiness metric. The first trustworthiness metric is used as a trustworthiness metric of a link between the first network device and the third network device, so that the third network device determines a shortest path based on the first trustworthiness metric. In this embodiment, the first network device may use the first trustworthiness metric determined for the session as a trustworthiness metric of the link corresponding to the session, and send the first trustworthiness metric to the third network device via the link state advertisement, so that when the third network device determines the shortest path according to the SPF algorithm, a trusted shortest path is selected based on the first trustworthiness metric.

Specifically, the link state advertisement (link state advertisement, LSA) may include link state (link state, LS) information, to carry the first trustworthiness metric in the LS information. The LS information is new network layer reachability information NLRI, used to carry link-related information, and may also be referred to as LS NLRI. In other words, the first trustworthiness metric is carried in the LS NLRI. Further, the first trustworthiness metric is carried in the link NLRI. A format of the link NLRI is a format of link NLRI shown in FIG. 7a. The link NLRI includes a protocol field, an identifier field, a local node descriptors field, a remote node descriptors field, and a link descriptors field.

Specifically, a type-length-value TLV may be newly added to the link NLRI to carry the first trustworthiness metric, or an existing TLV may be extended to carry the first trustworthiness metric. For example, the link NLRI includes a first sub-LTV, and a target field in the first sub-TLV carries the first trustworthiness metric. Alternatively, a second sub-TLV is newly added to the link NLRI, and the second sub-TLV carries the first trustworthiness metric. For example, the second sub-TLV is added to the link descriptors field to carry the first trustworthiness metric.

It can be learned that the first network device may obtain the plurality of routes arriving at the same prefix, and obtain the trustworthiness information of each route. The first network device selects, based on the trustworthiness of each route, the one or more routes for guiding packet forwarding. The trustworthiness of each route identifies the trustworthiness degree of the corresponding route. To be specific, when determining a route arriving at a destination address, the first network device selects, based on trustworthiness respectively corresponding to a plurality of optional routes, a route with a high trustworthiness degree for guiding packet forwarding, thereby meeting a service requirement.

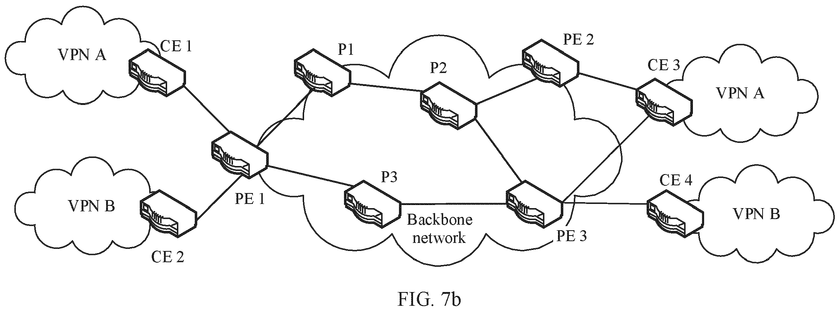

For ease of understanding of determining the trusted tunnel, the following provides descriptions with reference to an accompanying drawing. Refer to an application scenario shown in FIG. 7b. The application scenario includes two virtual private networks (virtual private networks, VPNs), which are a VPN A and a VPN B, respectively. The virtual private network includes three types of network devices: a customer edge (customer edge), an edge device on a service provider network (Provider edge, PE), and a backbone device on the service provider network (provider).

The CE is directly connected to the service provider SP (Service Provider) network through an interface. The CE may be a router or a switch, or may be a host. Generally, the CE is unaware of the VPN.

The PE is directly connected to the CE. A tunnel is deployed between PEs, and a VPN route is transmitted between PEs according to a BGP protocol.

The P is not directly connected to the CE, and the P device does not maintain VPN information.

The PE and the P device are managed by an SP only, and the CE device is managed by a user only, unless the user delegates a management right to the SP. One PE device may be connected to a plurality of CE devices. One CE device may also be connected to a plurality of PE devices belonging to a same service provider or different service providers.

When a PE 1 receives a route of the VPN A sent from a PE 2 according to the BGP protocol, a next hop address is a loopback (loopback) address of the PE 2. In this case, the PE 1 iterates to a tunnel from the PE 1 to the next hop address according to the BGP protocol and based on the next hop address. The tunnel may be a VXLAN tunnel, an IPSec tunnel, an SRv6 tunnel, or the like.

When the tunnel from the PE 1 to the next hop address is iterated to, it indicates that a route from the PE 1 to the PE 2 is reachable on a data plane, and further participates in route selection. In this case, the PE 1 needs to determine whether the tunnel is a trusted tunnel. Specifically, the PE 1 may first determine a type of the tunnel arriving at the next hop address, and then determine, based on a trusted evaluation point defined by the type of the tunnel, whether the tunnel that is iterated to is the trusted tunnel. For example, when the type of the tunnel to which the PE 1 is iterated is an SRv6 tunnel, a trusted evaluation point corresponding to the SRv6 tunnel may include one or more of the following: Whether all devices in the tunnel are trusted device, whether all links in the tunnel are trusted links, whether the tunnel is encrypted, whether an SRv6 packet header is check, and whether an SRv6 SID is encrypted. Each evaluation point corresponds to a different state, and corresponds to a different trustworthiness metric. For example, when all the devices in the tunnel are trusted devices, a corresponding trustworthiness metric is 1. If some of the devices in the tunnel are trusted devices, a corresponding trustworthiness metric is 32. If none of the devices in the tunnel are trusted devices, a corresponding trustworthiness metric is 96. A trustworthiness metric corresponding to each trusted evaluation point is determined, and then weighted summation is performed on trustworthiness metrics of a plurality of trusted evaluation points, to obtain a trustworthiness metric corresponding to the tunnel. When iterating to a plurality of tunnels arriving at the next hop address, the PE 1 obtains a trustworthiness metric corresponding to each tunnel, and obtains a trusted tunnel by comparing the trustworthiness metrics, to use the trusted tunnel to guide packet transmission.

Based on the foregoing method embodiments, an embodiment of this application provides a network device. The following provides descriptions with reference to accompanying drawings.

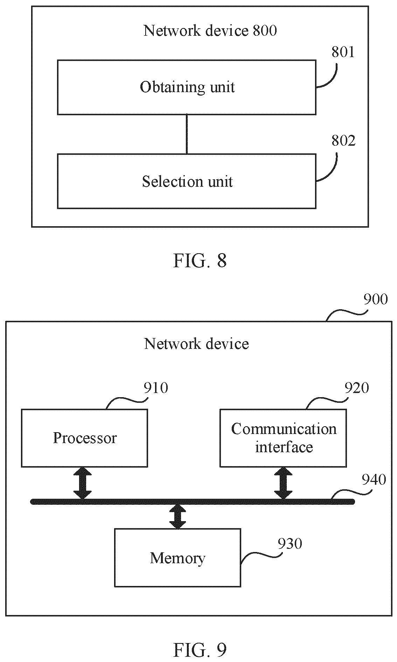

FIG. 8 is a diagram of a structure of a network device according to an embodiment of this application. A network device 800 can implement the functions of the first network device in the method embodiment in FIG. 1 or FIG. 6, or can implement the function of the P2 in the embodiment shown in FIG. 5. The network device 800 may include an obtaining unit 801 and a selection unit 802. The units may perform the corresponding functions of the first network device in the foregoing method embodiments.

The obtaining unit 801 may perform S101 in the embodiment shown in FIG. 1. The selection unit 802 may perform S102 in the embodiment shown in FIG. 1, and/or another process performed by the first network device in the technology described in this specification. For a specific execution process, refer to the detailed descriptions of corresponding steps in the embodiment shown in FIG. 1. Details are not described herein again. For example, the obtaining unit 801 is configured to: obtain a plurality of routes arriving at a same prefix, and obtain a first trustworthiness measurement value corresponding to each route in the foregoing method embodiment; and the selection unit 802 is configured to select, by the first network device based on trustworthiness of each route, one or more routes for guiding packet forwarding in the foregoing method embodiment.

Optionally, the network device 800 may further include a sending unit, where
the sending unit is configured to send a link state advertisement to a third network device, where the link state advertisement includes a first trustworthiness metric, and the first trustworthiness metric is a trustworthiness metric of a link between the first network device and the third network device, so that the third network device determines a shortest path based on the first trustworthiness metric.

It should be noted that, in embodiments of this application, division into units is an example, and is merely logical function division. In actual implementation, another division manner may be used. Functional units in embodiments of this application may be integrated into one processing unit, or each of the units may exist alone physically, or two or more units are integrated into one unit. For example, in the foregoing embodiment, the processing unit and the sending unit may be a same unit, or may be different units. The integrated unit may be implemented in a form of hardware, or may be implemented in a form of a software functional unit.

FIG. 9 is a diagram of a structure of a network device according to an embodiment of this application. The network device may be, for example, the first network device or the second network device in the foregoing method embodiments, or may be a specific implementation of the network device 800 in the embodiment shown in FIG. 8.

A network device 900 includes a processor 910, a communication interface 920, and a memory 930. There may be one or more processors 910 in the communication device 900, and one processor is used as an example in FIG. 9. In this embodiment of this application, the processor 910, the communication interface 920, and the memory 930 may be connected through a bus system or in another manner. An example in which the processor 910, the communication interface 920, and the memory 930 are connected through a bus system 940 is used in FIG. 9.

The processor 910 may be a CPU, an NP, or a combination of a CPU and an NP. The processor 910 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The memory 930 may include a volatile memory (volatile memory), for example, a random access memory (random access memory, RAM). The memory 930 may alternatively include a non-volatile memory (non-volatile memory), for example, a flash memory (flash memory), a hard disk drive (hard disk drive, HDD), or a solid-state drive (solid-state drive, SSD). The memory 930 may alternatively include a combination of the foregoing types of memories. The memory 930 may store, for example, the segment routing SR policy mentioned above.

Optionally, the memory 930 stores an operating system and a program, an executable module, or a data structure, or a subset thereof or an extended set thereof. The program may include various operation instructions, and is used to implement various operations. The operating system may include various system programs, to implement various basic services and process a hardware-based task. The processor 910 may read the program in the memory 930, to implement the route selection method provided in embodiments of this application.

The memory 930 may be a storage device in the communication device 900, or may be a storage apparatus independent of the communication device 900.

The bus system 940 may be a peripheral component interconnect (peripheral component interconnect, PCI) bus, an extended industry standard architecture (extended industry standard architecture, EISA) bus, or the like. The bus system 940 may be classified into an address bus, a data bus, a control bus, and the like. For ease of representation, only one thick line is used to represent the bus in FIG. 9, but this does not mean that there is only one bus or only one type of bus.

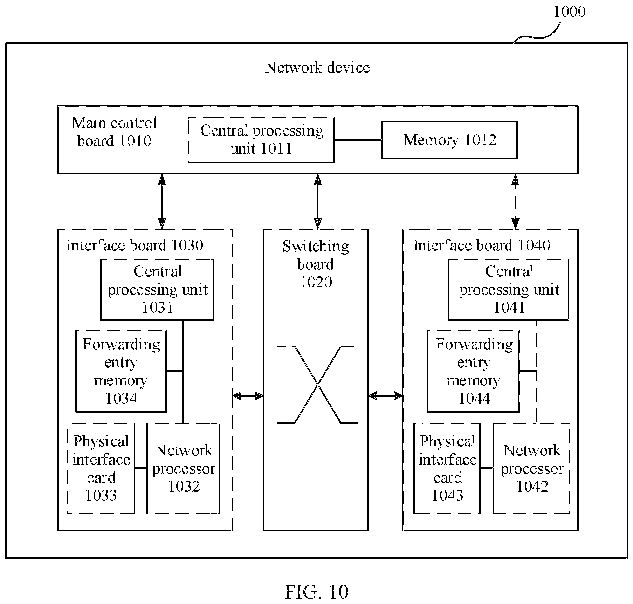

FIG. 10 is a diagram of a structure of a network device 1000 according to an embodiment of this application. The network device may be, for example, the first network device or the second network device in the foregoing method embodiments, or may be a specific implementation of the device 800 in the embodiment shown in FIG. 8.

The network device 1000 includes a main control board 1010 and an interface board 1030.

The main control board 1010 is also referred to as a main processing unit (main processing unit, MPU) or a route processor card (route processor card). The main control board 1010 controls and manages components in the network device 1000, including functions such as routing calculation, device management, device maintenance, and protocol processing. The main control board 1010 includes a central processing unit 1011 and a memory 1012.

The interface board 1030 is also referred to as a line processing unit (line processing unit, LPU) card, a line card (line card), or a service board. The interface board 1030 is configured to provide various service interfaces and forward a data packet. The service interface includes but is not limited to an Ethernet interface, a POS (Packet over SONET/SDH) interface, and the like. The Ethernet interface is, for example, a flexible Ethernet service interface (Flexible Ethernet Client, FlexE Client) interface. The interface board 1030 includes a central processing unit 1031, a network processor 1032, a forwarding entry memory 1034, and a physical interface card (physical interface card, PIC) 1033.

The central processing unit 1031 on the interface board 1030 is configured to control and manage the interface board 1030, and communicate with the central processing unit 1011 on the main control board 1010.

The network processor 1032 is configured to forward a packet. A form of the network processor 1032 may be a forwarding chip. Specifically, processing on an uplink packet includes: processing an inbound interface of the packet, and searching for a forwarding table. Processing of a downlink packet includes: searching for a forwarding table, and the like.

The physical interface card 1033 is configured to implement a physical layer interconnection function. Original traffic enters the interface board 1030 from the physical interface card 1033, and a processed packet is sent out from the physical interface card 1033. The physical interface card 1033 includes at least one physical interface. The physical interface is also referred to as a physical port. The physical interface card 1033, also referred to as a subcard, may be mounted on the interface board 1030, and is responsible for converting an optical/electrical signal into a packet, performing validity check on the packet, and forwarding the packet to the network processor 1032 for processing. In some embodiments, the central processing unit 1031 on the interface board 1030 may also perform a function of the network processor 1032, for example, implement software forwarding based on a general-purpose CPU, so that the network processor 1032 is not required in the physical interface card 1033.

Optionally, the network device 1000 includes a plurality of interface boards. For example, the network device 1000 further includes an interface board 1040, and the interface board 1040 includes a central processing unit 1041, a network processor 1042, a forwarding entry memory 1044, and a physical interface card 1043.

Optionally, the network device 1000 further includes a switching board 1020. The switching board 1020 may also be referred to as a switch fabric unit (switch fabric unit, SFU). When the network device includes a plurality of interface boards 1030, the switching board 1020 is configured to complete data exchange between the interface boards. For example, the interface board 1030 and the interface board 1040 may communicate with each other via the switching board 1020.

The main control board 1010 is coupled to the interface board 1030. For example, the main control board 1010, the interface board 1030, the interface board 1040, and the switching board 1020 are connected to a system backboard through a system bus. In this way, interworking is implemented. In a possible implementation, an inter-process communication (inter-process communication, IPC) channel is established between the main control board 1010 and the interface board 1030, and the main control board 1010 communicates with the interface board 1030 through the IPC channel.

Logically, the network device 1000 includes a control plane and a forwarding plane. The control plane includes the main control board 1010 and the central processing unit 1031. The forwarding plane includes components that perform forwarding, such as the forwarding entry memory 1034, the physical interface card 1033, and the network processor 1032. The control plane performs functions such as routing, generating a forwarding table, processing signaling and a protocol packet, and configuring and maintaining a device status. The control plane delivers the generated forwarding table to the forwarding plane. On the forwarding plane, based on the forwarding table delivered by the control plane, the network processor 1032 looks up the table, and forwards a packet received by the physical interface card 1033. The forwarding table delivered by the control plane may be stored in the forwarding entry memory 1034. In some embodiments, the control plane and the forwarding plane may be completely separated, and are not on a same device.

It should be understood that an operation on the interface board 1040 is consistent with an operation on the interface board 1030 in this embodiment of this application. For brevity, details are not described again. It should be understood that the network device 1000 in this embodiment may correspond to the first network device in the foregoing method embodiments. The main control board 1010, the interface board 1030, and/or the interface board 1040 in the network device 1000 may implement various steps in the foregoing method embodiments. For brevity, details are not described herein again.

It may be understood that, there may be one or more main control boards. When there are a plurality of main control boards, the main control boards may include an active main control board and a standby main control board. There may be one or more interface boards. A network device with a stronger data processing capability provides a larger quantity of interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need a switching board, and the interface board provides a function of processing service data of an entire system. In a distributed forwarding architecture, the network device may have at least one switching board, and data exchange between a plurality of interface boards is implemented via the switching board, to provide a large-capacity data exchange and processing capability. Therefore, a data access and processing capability of the network device in the distributed architecture is greater than that of the device in the centralized architecture. Optionally, the network device may alternatively be in a form in which there is only one card. To be specific, there is no switching board, and functions of the interface board and the main control board are integrated on the card. In this case, a central processing unit on the interface board and a central processing unit on the main control board may be combined to form one central processing unit on the card, to perform functions obtained after the two central processing units are combined. This form of device (for example, a network device such as a low-end switch or a router) has a weak data exchange and processing capability. A specific architecture that is to be used depends on a specific networking deployment scenario.

In some possible embodiments, the network device may be implemented as a virtualized device. For example, the virtualized device may be a virtual machine (virtual machine, VM) on which a program having a packet sending function is run, and the virtual machine is deployed on a hardware device (for example, a physical server). The virtual machine is a complete software-simulated computer system that has complete hardware system functions and that runs in an entirely isolated environment. The virtual machine may be configured as the network device. For example, the virtual machine may implement a network device based on a general-purpose physical server in combination with a network functions virtualization (network functions virtualization, NFV) technology. The network device is a virtual host, a virtual router, or a virtual switch. By reading this application, a person skilled in the art may obtain, on the general-purpose physical server through virtualization with reference to the NFV technology, the network device having the foregoing functions. Details are not described herein.

It should be understood that the network devices in the foregoing various product forms have any function of the first network device in the foregoing method embodiments, and details are not described herein.

An embodiment of this application further provides a chip, including a processor and an interface circuit. The interface circuit is configured to: receive instructions, and transmit the instructions to the processor. The processor may be, for example, a specific implementation form of the device 800 shown in FIG. 8, and may be configured to perform the foregoing method. The processor is coupled to a memory. The memory is configured to store a program or instructions. When the program or the instructions are executed by the processor, the chip system is enabled to implement the method in any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field-programmable gate array (field-programmable gate array, FPGA), an application-specific integrated chip (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), or a programmable controller (programmable logic device, PLD) or another integrated chip.

An embodiment of this application further provides a route selection system, including a first network device and a second network device. The second network device is configured to send a route to the first network device. The first network device performs, based on the received route, the route selection method provided in the foregoing embodiments.

An embodiment of this application further provides a computer-readable storage medium, including instructions or a computer program. When the instructions or the computer program is run on a computer, the computer is enabled to perform the route selection method provided in the foregoing embodiments.

An embodiment of this application further provides a computer program product including instructions or a computer program. When the computer program product runs on a computer, the computer is enabled to perform the route selection method provided in the foregoing embodiments.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way is interchangeable in proper circumstances so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical service division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, service units in embodiments of this application may be integrated into one processing unit, or each unit may exist alone physically, or two or more units may be integrated into one unit. The integrated unit may be implemented in a form of hardware, or may be implemented in a form of a software service unit.

When the integrated unit is implemented in the form of a software service unit and sold or used as an independent product, the integrated unit may be stored in a computer-readable storage medium. Based on such an understanding, the technical solutions of this application essentially, or a part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The storage medium includes any medium that can store program code, for example, a USB flash drive, a removable hard disk, a read-only memory (ROM, Read-Only Memory), a random access memory (RAM, Random Access Memory), a magnetic disk, or an optical disc.

A person skilled in the art should be aware that in the foregoing one or more examples, the services described in this application may be implemented by hardware, software, firmware, or any combination thereof. When implemented by software, these services may be stored in a computer-readable medium or transmitted as one or more instructions or code on the computer-readable medium. The computer-readable medium includes a computer storage medium and a communication medium, where the communication medium includes any medium that enables a computer program to be transmitted from one place to another. The storage medium may be any available medium accessible to a general-purpose or a special-purpose computer.

In the foregoing specific implementations, the objectives, the technical solutions, and the beneficial effects of this application are further described in detail. It should be understood that the foregoing descriptions are merely specific implementations of this application.

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. A route selection method, wherein the method comprises:
obtaining, by a first network device, a plurality of routes arriving at a same prefix; and
selecting, by the first network device based on trustworthiness of each route, one or more routes for guiding packet forwarding, wherein the trustworthiness of each route identifies a trustworthiness degree of the corresponding route.

2. The method according to claim 1, wherein if the selected one or more routes for guiding packet forwarding are trusted routes, the trusted route meets one or more of the following conditions:
a route prefix of the route legally belongs to a specific autonomous system AS, the route passes through a verifiable AS path, and the route is sent to a receiver securely.

3. The method according to claim 2, wherein if the trusted route is iterated to a trusted tunnel, the trusted tunnel meets one or more of the following conditions:
all devices in the tunnel are trusted devices, all links in the tunnel are trusted links, and the trusted tunnel is a tunnel that provides security protection.

4. The method according to any one of claims 1 to 3, wherein the method is applied to one or more of the following scenarios: an Internet scenario, a regional confederation scenario, and an internet exchange point IXP scenario.

5. The method according to any one of claims 1 to 4, wherein the selecting, by the first network device based on trustworthiness of each route, one or more routes for guiding packet forwarding comprises:
obtaining, by the first network device, a first trustworthiness metric corresponding of each route, wherein the first trustworthiness metric is determined based on a security parameter item configured on a session established between the first network device and a second network device that sends the route; and
selecting, by the first network device based on the first trustworthiness metric of each route, the one or more routes for guiding packet forwarding.

6. The method according to claim 5, wherein the first network device and the second network device are border gateway protocol BGP peers.

7. The method according to claim 5, wherein the obtaining, by the first network device, a first trustworthiness metric corresponding to each route comprises:
obtaining, by the first network device for any route, a security value corresponding to each security parameter item; and
performing, by the first network device, weighted summation on security values, to obtain the first trustworthiness metric corresponding to the route.

8. The method according to claim 7, wherein a weight corresponding to each security parameter item is determined based on an application scenario corresponding to the first network device.

9. The method according to any one of claims 5 to 8, wherein the security parameter item comprises at least one or more of a resource public key infrastructure RPKI item, a route leak protection RLP item, and a session security item.

10. The method according to claim 9, wherein the RPKI item comprises at least one or more of ingress route origin validation Ingress ROV, egress route origin validation Egress ROV, BGP path verification BGP Sec, autonomous system provider authorization ASPA, and regional validation RV.

11. The method according to claim 9 or 10, wherein the session security item comprises at least one or more of an encrypted transmission item, an anti-tamper item, a periodic key change item, a session resilience anti-shock item, and an anti-distributed denial of service DDoS attack item.

12. The method according to any one of claims 9 to 11, wherein if a route is iterated to a tunnel, the security parameter item further comprises a tunnel security item.

13. The method according to claim 12, wherein the method further comprises:
determining, by the first network device based on a type of the tunnel, each tunnel security parameter item corresponding to the tunnel; and
determining, by the first network device based on a security value corresponding to each tunnel security parameter item, a tunnel security value corresponding to the tunnel.

14. The method according to claim 13, wherein the selecting, by the first network device based on the first trustworthiness metric of each route, the one or more routes for guiding packet forwarding comprises:
selecting, by the first network device based on a tunnel security value of each route, the one or more routes for guiding packet forwarding.

15. The method according to any one of claims 12 to 14, wherein the type of the tunnel comprises a segment routing over IPv6 SRv6 tunnel, a virtual extensible local area network VXLAN tunnel, and an internet protocol security IPSec tunnel.

16. The method according to any one of claims 5 to 15, wherein the selecting, by the first network device based on the first trustworthiness metric of each route, the one or more routes for guiding packet forwarding comprises:
determining, by the first network device based on the first trustworthiness metric, a first attribute value of the route corresponding to the first trustworthiness metric; and
determining, by the first network device, a route corresponding to a largest first attribute value as a route for guiding packet forwarding.

17. The method according to claim 16, wherein the first attribute value is a local preference Local_Pref attribute value or a multi-exit discriminator MED attribute value.

18. The method according to any one of claims 5 to 17, wherein the selecting, by the first network device based on the first trustworthiness metric of each route, the one or more routes for guiding packet forwarding comprises:
selecting, by the first network device based on the first trustworthiness metric and a second trustworthiness metric of each route, the one or more routes for guiding packet forwarding, wherein the second trustworthiness metric is a trustworthiness metric corresponding to the route that arrives at the prefix and that is determined by the second network device.

19. The method according to claim 18, wherein the selecting, by the first network device based on the first trustworthiness metric and a second trustworthiness metric of each route, the one or more routes for guiding packet forwarding comprises:
performing, by the first network device for each route, weighted summation on the first trustworthiness metric and the second trustworthiness metric that correspond to the route, to obtain a target trustworthiness metric corresponding to the route; and
selecting, by the first network device based on the target trustworthiness metric of each route, the one or more routes for guiding packet forwarding.

20. The method according to claim 18 or 19, wherein the second trustworthiness metric is carried in a routing packet sent by the second network device to the first network device, and the routing packet comprises the route, or is delivered by a controller to the first network device.

21. The method according to any one of claims 5 to 20, wherein the method further comprises:
sending, by the first network device, a link state advertisement to a third network device, wherein the link state advertisement comprises the first trustworthiness metric, and the first trustworthiness metric is a trustworthiness metric of a link between the first network device and the third network device, so that the third network device determines a shortest path based on the first trustworthiness metric.

22. The method according to claim 21, wherein the link state advertisement comprises link network layer reachability information NLRI, and the link NLRI comprises the first trustworthiness metric.

23. The method according to claim 22, wherein the link NLRI comprises a first sub-type length value TLV, and a target field in the first sub-TLV carries the first trustworthiness metric.

24. The method according to claim 22, wherein the link NLRI comprises a second sub-TLV, and the second sub-TLV carries the first trustworthiness metric.

25. A network device, wherein the network device is a first network device in a network and comprises:
an obtaining unit, configured to obtain a plurality of routes arriving at a same prefix; and
a selection unit, configured to select, based on trustworthiness of each route, one or more routes for guiding packet forwarding, wherein the trustworthiness of each route identifies a trustworthiness degree of the corresponding route.

26. The network device according to claim 25, wherein if the selected one or more routes for guiding packet forwarding are trusted routes, the trusted route meets one or more of the following conditions:
a route prefix of the route legally belongs to a specific autonomous system AS, the route passes through a verifiable AS path, and the route is sent to a receiver securely.

27. The network device according to claim 26, wherein if the trusted route is iterated to a trusted tunnel, the trusted tunnel meets one or more of the following conditions:
all devices in the tunnel are trusted devices, all links in the tunnel are trusted links, and the trusted tunnel is a tunnel that provides security protection.

28. The network device according to any one of claims 25 to 27, wherein the network device is applied to one or more of the following scenarios: an Internet scenario, a regional confederation scenario, and an internet exchange point IXP scenario.

29. The network device according to any one of claims 25 to 28, wherein the selection unit comprises an obtaining subunit and a selection subunit, wherein
the obtaining subunit is configured to obtain a first trustworthiness metric of each route, wherein the first trustworthiness metric is determined based on a security parameter item configured on a session established between the network device and a second network device that sends the route; and
the selection subunit is configured to select, based on the first trustworthiness metric of each route, the one or more routes for guiding packet forwarding.

30. The network device according to claim 29, wherein the first network device and the second network device are border gateway protocol BGP peers.

31. The network device according to claim 29, wherein the obtaining subunit is configured to: obtain, for any route, a security value corresponding to each security parameter item; and perform weighted summation on security values, to obtain the first trustworthiness metric corresponding to the route.

32. The network device according to claim 31, wherein a weight corresponding to each security parameter item is determined based on an application scenario corresponding to the first network device.

33. The network device according to any one of claims 29 to 32, wherein the security parameter item comprises at least one or more of a resource public key infrastructure RPKI item, a route leak protection RLP item, and a session security item.

34. The network device according to claim 33, wherein the RPKI item comprises at least one or more of ingress route origin validation Ingress ROV, egress route origin validation Egress ROV, BGP path verification BGP Sec, autonomous system provider authorization ASPA, and regional validation RV

35. The network device according to claim 33 or 34, wherein the session security item comprises at least one or more of an encrypted transmission item, an anti-tamper item, a periodic key change item, a session resilience anti-shock item, and an anti-distributed denial of service DDoS attack item.

36. The network device according to any one of claims 33 to 35, wherein if a route is iterated to a tunnel, the security parameter item further comprises a tunnel security item.

37. A route selection system, wherein the system comprises a first network device and a second network device, wherein
the second network device is configured to send a route to the first network device; and
the first network device is configured to perform, based on the route sent by the second network device, the method according to any one of claims 1 to 24.

38. A computer-readable storage medium, comprises instructions, wherein when the instructions are run on a computer, the computer is enabled to perform the method according to any one of claims 1 to 24.

39. A computer program product, wherein the computer program product comprises a program, and when the program is run on a processor, a computer or a network device is enabled to perform the method according to any one of claims 1 to 24.

40. A chip, comprising an interface circuit and a processor, wherein the interface circuit is connected to the processor, and the processor is configured to enable the chip to perform the method according to any one of claims 1 to 24.
